# EUROPEAN PATENT SPECIFICATION

(11) **EP 4 171 204 B1**
(45) Date of publication and mention of the grant of the patent: **08.01.2025**
(21) Application number: 21734960.4
(22) Date of filing: 14.06.2021
(51) Int. Cl.: A01K 1/12, A01J 5/017

(54) **A MILKING ARRANGEMENT AND MILKING PARLOR FOR AN ANIMAL**
MELKEINRICHTUNG UND MELKSTAND FÜR EIN TIER
ENSEMBLE DE TRAITE ET INSTALLATION DE TRAITE POUR UN ANIMAL

(30) Priority: 25.06.2020 SE 2050760
(43) Date of publication of application: 03.05.2023
(73) Proprietor: DeLaval Holding AB, 147 21 Tumba (SE)
(72) Inventor: HAMERTON, Lance, 147 21 Tumba (SE)
(74) Representative: DeLaval International AB
(86) International application number: PCT/SE2021/050577
(87) International publication number: WO 2021/262066

(56) References cited:
- EP-A2- 1 553 818
- US-A1- 2011 168 095

## Description

### TECHNICAL FIELD OF THE INVENTION

The present invention relates to a milking arrangement for an animal including a support structure for a milking cluster, wherein the milking cluster is moveable between an upper position and a lower position in relation to the support structure. The support structure hereby includes a stationary support arm having a projecting length as seen in a horizontal direction and a suspension point from which the milking cluster is arranged to be suspended in a cord as it moves between the upper and lower positions. The present invention also relates to a milking parlor including a plurality of milking stalls arranged on a platform, wherein each milking stall includes the milking arrangement.

### BACKGROUND OF THE INVENTION

US6450118 discloses such a known milking arrangement including the support structure situated on a rotatable platform of a rotary milking parlor. The support structure includes an automatic cluster removal device for automatically detaching the teat cups of the milking cluster from the teats of the animal when milking is completed. The milking cluster is raised to the upper position by the automatic cluster removal device, wherein the milking cluster is hanging from the suspension point in the stationary support arm in the upper position located above the rotatable platform and thereafter dropped to the lower position located below the rotatable platform. A cleaning operation (back flushing) of the milking cluster is performed as the milking cluster is hanging in the lower position. The lower position also keeps the milking cluster away and protected from animals entering/exiting the rotating platform. The animals enter/exit via a stationary bridge that provides a small gap to the rotating platform. The milking cluster is thereby hanging in the lower position by the cord, which passes through the small gap between the stationary bridge and the rotating platform. There is however a risk, when dropping the milking cluster to the lower position in this known support structure, that the milking cluster is caught on the platform and never reach the lower position below the platform. If the milking cluster is stuck hanging on the edge of the rotating platform, the milking cluster may be crushed or otherwise damaged by the stationary bridge. Furthermore, the animals that enter/exit the rotating platform may hereby damage the milking cluster by stepping or standing on the milking cluster that is stuck on the ground of the rotating platform.

EP1553818 discloses another known milking arrangement with a support structure situated on a rotatable platform of a rotary milking parlor. The support structure hereby includes a pivoting (non-stationary) support arm for suspending the milking cluster in the upper position and the lower position. More precisely, the pivoting support arm includes a suspension point for the milking cluster, which is moveable between a downward vertical orientation in the lower position and a horizontal orientation in the upper position. The horizontal orientation of the pivoting support arm prevents the milking cluster from striking the platform, while the vertical orientation keeps the cord of the milking cluster near an edge of the rotating platform to maintain the cord of the milking cluster safely away from the stationary bridge. However, the mechanism of the pivoting support arm for extending and retracting the suspension point of the milking cluster is more complicated than having a stationary support arm without any moving parts. Furthermore, the mechanism of the pivoting support arm involves a risk of malfunctioning parts that are subject to wear making it more unreliable in operation than the stationary support arm.

### SUMMARY OF THE INVENTION

An object of the present invention is that of providing an improved milking arrangement including a reliable support structure that prevents the milking cluster from getting caught on the platform of the milking parlor when the milking cluster is moved between the upper position and the lower position. This is achieved by the milking arrangement of claim 1. Accordingly, the support structure of the initially defined milking arrangement hereby includes an inclined cluster slide surface, which is situated below the stationary support arm. The inclined cluster slide surface is configured with a horizontal extension, as seen in the horizontal direction underneath the stationary support arm, towards a position vertically below the suspension point, so that the milking cluster will slide along the inclined cluster slide surface as the milking cluster moves between the upper position and the lower position.

In this way, the inclined cluster slide surface ensures that the milking cluster slides past an edge of the platform of the milking parlor, whereby the milking cluster is prevented from getting caught on the platform. In other words, the inclined cluster slide surface ensures that the milking cluster reaches the lower position, so that the milking cluster is kept away from the animals and protected from damage during operation. The inclined cluster slide surface also enables the use of a more reliable stationary support arm. Hence, the stationary support arm with the inclined cluster slide surface does not require the mechanism of the pivoting support arm for extending and retracting the suspension point. Additionally, the inclined cluster slide surface enables the use of a relatively short stationary support arm. Accordingly, the stationary support arm with its suspension point is not required to extend to a position significantly beyond the platform to ensure a correct milking cluster drop. This is beneficial, because the stationary support arm is not in the way during operation. Furthermore, if the support arm and its suspension point is sticking out too far, there is a risk of premature cord wear, which is caused by the cord being forced or guided into the gap provided between the stationary bridge and the rotating platform. The stationary support arm with the inclined cluster slide surface therefore provides a simpler, more cost-efficient and reliable way of ensuring that the milking cluster correctly reaches the lower position below the platform, so that the milking cluster is protected from damage during operation.

In an embodiment of the milking arrangement, the inclined cluster slide surface is extending at an inclination angle α in a range of 30° - 70° in relation to the horizontal direction. The inclination angle is at least 30° to ensure that the milking cluster slides downwards on the inclined cluster slide surface. However, the inclination angle should not be too steep (not more than 70°) to ensure that the milking cluster is guided sufficiently outwards and past an edge of a platform. Hence, inclination angles above 70° would require an unpractical (high) vertical extension on the inclined cluster slide surface to ensure that the milking cluster is guided sufficiently outwards. The inclination angle α is hereby preferably in a range of 45° - 65°. The inclined cluster slide surface is preferably planar. However, the inclined cluster slide surface may have a concave and/or convex extension in a lengthwise and/or a widthwise direction of the inclined cluster slide surface. In such a case, the inclination angle α is defined as the inclination angle α of a chord (imaginary straight line), as seen in a longitudinal section (lengthwise direction) of the concave and/or convex inclined cluster slide surface, extending between an upper end point and a lower end point of the concave and/or convex inclined cluster slide surface. It should also be noted that the inclined cluster slide surface can have a v-shaped extension in the lengthwise and/or the widthwise direction. The inclination angle α is hereby defined in the same manner as in the above mentioned case with the concavely and/or convexly extending inclined cluster slide surface.

In a further embodiment of the milking arrangement, the horizontal extension on the inclined cluster slide surface is at least 60% of the projecting length on the stationary support arm. Accordingly, it is not necessary that the inclined cluster slide surface extends along the entire projecting length on the stationary support arm, as long as it ensures that the milking cluster slides past an edge of the platform. The stationary support arm may for instance extend a short distance beyond the edge of the platform, while the inclined cluster slide surface extends to (or near) the edge of the platform. Furthermore, if the suspension point is located inside an outer end of the stationary support arm, the inclined cluster slide surface is neither required to extend along the entire projecting length of the stationary support arm. The stationary support arm may for instance form an outer shield portion that is surrounding and protecting the suspension point of the milking cluster, whereby the suspension point is arranged inside the outer end of the stationary support arm.

In a further embodiment of the milking arrangement, the horizontal extension on the inclined cluster slide surface is at most 100% of the projecting length on the stationary support arm. In other words, the inclined cluster slide surface does not extend beyond the projecting length of the stationary support arm. Hence, it's not necessary to extend the inclined cluster slide surface beyond the projecting length in order to ensure a correct milking cluster drop. In most situations the horizontal extension of the inclined cluster slide surface suitably extends to the location of the suspension point on the stationary support arm. Accordingly, if the suspension point of the milking cluster is located at an outer end of the stationary support arm, the horizontal extension on the inclined cluster slide surface is beneficially provided along the entire projecting length of the stationary support arm.

In an embodiment of the milking arrangement, the projecting length on the stationary support arm is in a range of 10 - 30 cm. The embodiment hereby provides a relatively short stationary support arm that does not project a significant distance beyond the platform edge. Hence, the stationary support arm is not in the way during operation and provides a more ergonomic milking cluster position closer to the udder of the animal. Furthermore, the suspension point does not extend significantly beyond an edge of the platform. Thus, the outer end of the stationary support arm and the suspension point as well as the cord of the milking cluster can beneficially be arranged closer to the platform edge, whereby a risk of premature cord wear is reduced as the cord need not be guided or forced into a gap between a stationary bridge and a rotating platform.

In yet an embodiment of the milking arrangement, the inclined cluster slide surface has a lower end, which is situated vertically below the suspension point on the stationary support arm. In other words, the horizontal extension on the inclined cluster slide surface extends to the suspension point of the milking cluster to ensure that the milking cluster slides past the edge of the platform and is prevented from getting caught on the platform.

In a further embodiment of the milking arrangement, the inclined cluster slide surface has an upper end, which is located at a vertical distance below the stationary support arm. Accordingly, the inclined cluster slide surface has a vertical extension that does not extend all the way up to the stationary support arm, but rather ends at a vertical distance below the stationary support arm. In this way the support structure is provided with more space below the stationary support arm for the milking cluster to hang in the upper position. A lower portion of the milking cluster may however touch (be supported by) the inclined cluster slide surface. The support structure may further be arranged with a display and/or an input device/buttons in a console provided between the stationary support arm and the inclined cluster slide surface, whereby for instance an automatic cluster removal device can be operated via the console.

In yet a further embodiment of the milking arrangement, the inclined cluster slide surface has a vertical extension, as seen in the vertical direction, between a lower end and an upper end of the inclined cluster slide surface, wherein the vertical extension is 30% - 50% of a total height of the support structure, as seen in the vertical direction, between the lower end of the inclined cluster slide surface and the stationary support arm. Hence, the inclined cluster slide surface is located along a 30% - 50% lower part of the total height of the support structure. This provides a suitable space below the stationary support arm for the milking cluster to hang in the upper position, while providing sufficient vertical extension on the inclined cluster slide surface to ensure a correct milking cluster drop. It may also be noted that it's rather unnecessary to provide a vertical extension all the way up to the stationary support arm, because the milking cluster suspended from the stationary support arm will never reach or slide against an uppermost portion of such an extended inclined cluster slide surface.

In another embodiment of the milking arrangement, the support structure is forming a cabinet with a cleaning device for the milking cluster arranged inside the cabinet, wherein the inclined cluster slide surface is forming a cabinet door, which is turnable between a first position in which the cabinet is closed and a second position in which the cabinet is open for accessing the cleaning device for the milking cluster. The cleaning device is for instance so called jetters arranged inside the cabinet support structure and onto which the teat cups of the milking cluster can be placed for a cleaning of the milking cluster. Accordingly, after a milking session is completed the operator can open the cabinet door or inclined cluster slide surface for a compact and convenient access to the cleaning device (jettes) arranged inside the cabinet.

In an embodiment of the milking arrangement, the support structure is part of a side wall in a milking stall. More precisely, the support structure is part of an end post of the side wall in the milking stall. In this way the support structure is forming an integrated compact part of the side wall in the milking stall, which further provides the milking cluster in a suitable position that is easily accessible for an operator that attaches the milking cluster to the teats of the animal.

In a further embodiment of the milking arrangement, the support structure and the side wall of the milking stall is housing an automatic cluster removal device for automatically removing the milking cluster from the teats of an animal when milking is completed, wherein the automatic cluster removal device is arranged to move the milking cluster between the upper position and the lower position. Accordingly, the automatic cluster removal device is integrated and protected inside the side wall and support structure. The automatic cluster removal device typically includes a pneumatic cylinder connected to the cord of the milking cluster and a control unit for automatically actuating the pneumatic cylinder to retract the cord and remove the milking cluster when the milking session is completed. The pneumatic cylinder of the embodiment is preferably arranged inside a side rail of the side wall, wherein the cord is extending horizontally toward and inside the support arm, which is arranged in level with the side rail. In this way the pneumatic cylinder can exhibit an extended length (an extended stroke length) inside the side rail with the cord extending linearly to the suspension point (without any pulley-arrangement located inside the support structure or the side wall). Additionally, the support structure of the embodiment preferably includes the control unit with an input device (buttons) for the automatic cluster removal device.

According to a further aspect of the invention, the object is also achieved by a milking parlor including a plurality of milking stalls arranged on a platform, wherein each milking stall includes the milking arrangement according to any one of the embodiments mentioned above. The support structure is hereby situated on the platform for suspending the milking cluster in the upper position above the platform and the lower position below the platform, wherein the inclined cluster slide surface extends to an edge of the platform. In this way the inclined cluster slide surface ensures that the milking cluster slides past the edge of the platform, whereby the milking cluster is prevented from getting stuck on the platform. The inclined cluster slide is preferably extending up to the edge of the platform, yet the inclined cluster slide surface will still provide a correct milking cluster drop as long as it's extending within a few centimeters of the platform edge. In other words, the inclined cluster slide surface need not extend exactly up to the edge. Moreover the inclined cluster slide surface evidently also prevents the platform from catching the milking cluster if it extends beyond the platform edge, but such further extension is not necessary in terms of ensuring a correct milking cluster drop. The benefits of the embodiments on the milking arrangement in connection with the milking parlor including the platform is described above.

In an embodiment of the milking parlor, the platform is a rotatable platform forming a rotary milking parlor and the inclined cluster slide surface extends to an outer edge of the rotatable platform. Although the milking arrangement may be used in any type of milking parlor with a (stationary) platform, the milking arrangement with the inclined cluster slide surface is beneficially used in the rotary milking parlor with the rotating platform as also described above.

In a further embodiment of the milking parlor, the inclined cluster slide surface has a lower end, which is vertically aligned with the edge of the platform. Hence, the lower end of the inclined cluster slide surface is neither sticking out (extending beyond) nor retracted from (extending within) the platform edge. In this way the inclined cluster slide surface effectively guides the milking cluster past the edge of the platform, while the cord of the milking cluster can hang close to the edge of the platform. As mentioned previously this reduces the risk of premature cord wear as the cord need not be guided or forced into a gap formed between a stationary bridge and the edge of the rotating platform.

In yet a further embodiment of the milking parlor, the suspension point on the stationary support arm is vertically aligned with the edge of the platform. In this way the cord of the milking cluster is also kept close to the edge of the platform, whereby the risk of premature cord wear, as mentioned above, is further reduced.

### BRIEF DESCRIPTION OF THE DRAWINGS

The present invention is explained more closely by means of a detailed embodiment, given as an example, and with reference to the appendant drawings.
Fig. 1 shows a milking parlor including a milking arrangement according to an embodiment of the invention.
Fig. 2A - 2B shows the milking arrangement of the embodiment having a milking cluster suspended in an upper position and a lower position respectively.
Fig. 3 shows the support structure of the embodiment forming a cabinet, which is housing a cleaning device for the milking cluster.
Fig. 4 shows a perspective view of the milking arrangement embodiment included in a milking stall on a rotary milking parlor.
Fig. 5 shows a perspective view of the milking arrangement embodiment included in a plurality of milking stalls provided on the rotary milking parlor.

### DETAILED DESCRIPTION OF EMBODIMENTS

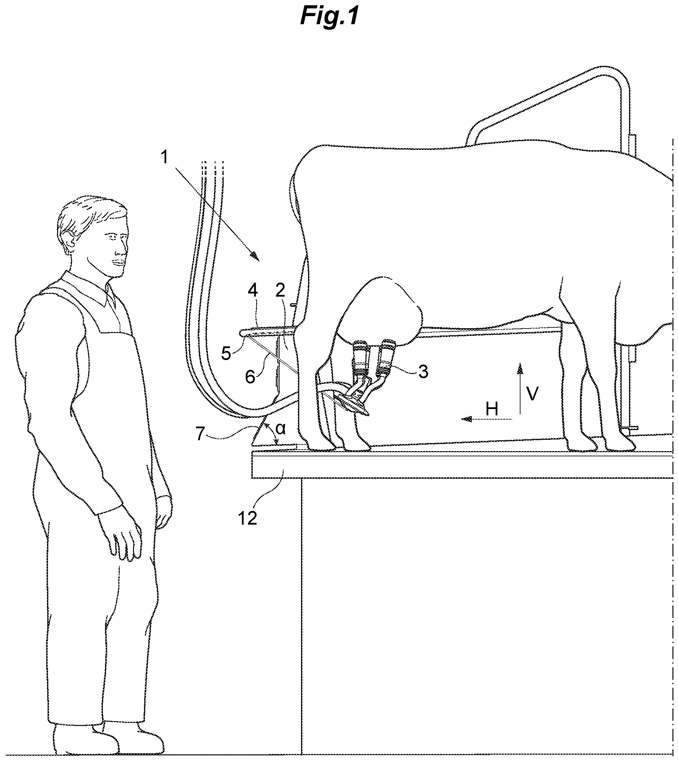

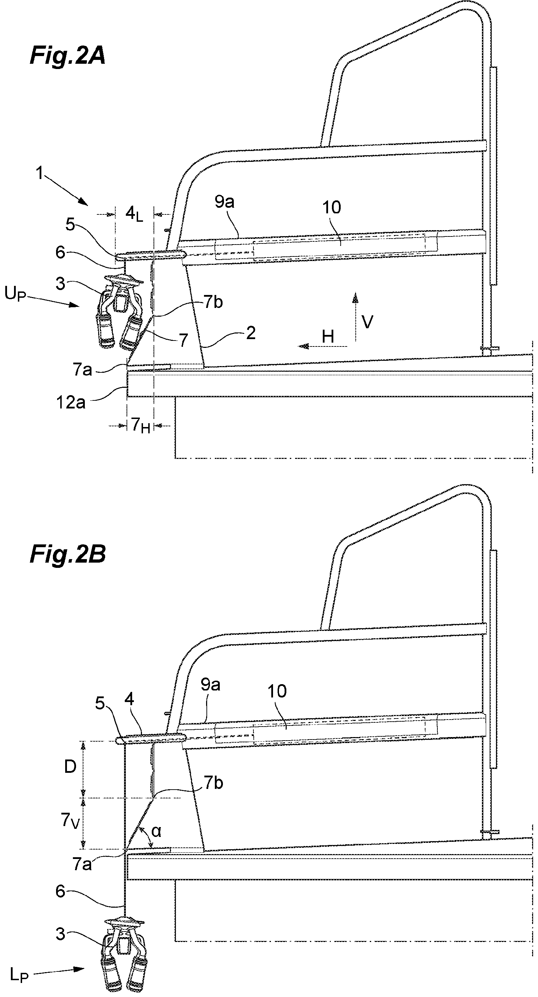

Fig. 1 is showing a milking arrangement 1 including a support structure 2 for a milking cluster 3 according to a detailed embodiment of the invention. The milking cluster 3 is shown with its teat cups attached to the teats of an animal (cow) during a milking session. Accordingly, an operator (dairy farmer) has attached the milking cluster 3 to the teats of the animal (cow) present in a milking stall 9 arranged on a platform 12. The milking arrangement includes an automatic cluster removal device 10 (see Fig. 2A and 2B) that automatically removes the milking cluster 3 from the teats when the milking session is completed.

Fig. 2A and 2B is showing how the milking cluster 3 is moved by the automatic cluster removal device between an upper position U_{P} and a lower position L_{P} in relation to the support structure 2 and the platform 12. The support structure 2 hereby includes a stationary support arm 4, which has a projecting length 4_{L} as seen in a horizontal direction H. The stationary support arm 4 is further provided with a suspension point 5 from which the milking cluster 3 is arranged to be suspended in a cord 6 as it moves between the upper position U_{P} and the lower positions L_{P}. The support structure 2 hereby comprises an inclined cluster slide surface 7, which is situated below the stationary support arm 4. The inclined cluster slide surface 7 is configured with a horizontal extension 7_{H}, as seen in the horizontal direction H underneath the stationary support arm 4, towards a position vertically below the suspension point 5, so that the milking cluster 3 will slide along the inclined cluster slide surface 7 as the milking cluster 3 is moved between the upper position U_{P} and the lower position L_{P}. The inclined cluster slide 7 surface ensures that the milking cluster 3 slides past an edge 12a of the platform 12, so that the milking cluster 3 is prevented from getting stuck on the platform 12. Accordingly, the inclined cluster slide surface 7 thereby ensures that the milking cluster 3 reaches the lower position L_{P}, so that the milking cluster 3 is protected from damage during operation of the milking parlor.

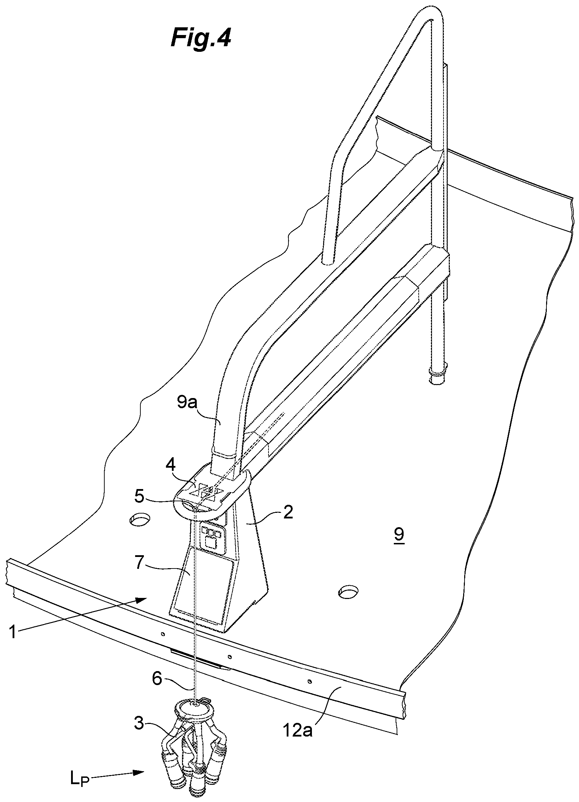

As can be seen in Fig 1 and 2B, the inclined cluster slide surface 7 is extending at an inclination angle α in relation to the horizontal direction H. In the shown embodiment the inclination angle α on the inclined cluster slide surface is approximately 60°. The inclination angle α can be either higher or lower, but it should be at least 30° to ensure that the milking cluster 3 effectively slides downward on the inclined cluster slide surface 7. Additionally, the inclination angle α should not be higher than 70° as it would require an unpractical (high) vertical extension on the inclined cluster slide surface 7. The inclination angle α is hereby preferably in a range of 45° - 65°. The inclined cluster slide surface 7 of the embodiment is planar (see also Figs. 4 - 5). However, as previously mentioned, the inclined cluster slide surface 7 could alternatively have a (slightly) concave and/or convex extension in a lengthwise and/or a widthwise direction of the inclined cluster slide surface 7. The inclination angle α is thereby measured as the inclination angle α of a chord (imaginary straight line), as seen in a longitudinal section (lengthwise direction) of the concave and/or convex inclined cluster slide surface, extending between an upper end point 7b and a lower end point 7a of the concave and/or convex inclined cluster slide surface. Also, as previously mentioned, the inclined cluster slide surface 7 could have a v-shaped extension in the lengthwise and/or the widthwise direction, wherein the inclination angle α is measured in the same manner as in the case with a concavely and/or convexly extending inclined cluster slide surface.

Furthermore, as can be seen in Fig. 2A, the horizontal extension 7_{H} on the inclined cluster slide surface 7 of the shown embodiment is not extending along the entire projecting length 4_{L} of the stationary support arm 4. Instead the horizontal extension 7_{H} on the inclined cluster slide surface 7 is approximately 70% of the projecting length 4_{L} on the stationary support arm 4. The inclined cluster slide surface 7 is hereby provided with a lower end 7a, which is situated vertically below the suspension point 5 on the stationary support arm 4. More precisely, both the lower end 7a of the inclined cluster slide surface 7 as well as the suspension point 5 of the stationary support arm 4 is vertically aligned with the edge 12a of the platform 12 (see also Fig. 2B). In this way the milking cluster 3 is effectively guided past the edge 12a of the platform 12, while the cord 6 of the milking cluster 3 can hang close to the edge 12a of the platform 12. The horizontal extension 7_{H} on the inclined cluster slide surface 7 may vary, yet it is preferably at least 60% and at most 100% of the projecting length 4_{L} on the stationary support arm 4. The horizontal extension 7_{H} depends on the location of the suspension point 5 on the stationary support arm 4 and/or on how far the stationary support arm 4 extends beyond the edge 12a of the platform 12. In this detailed embodiment the suspension point 5 is located somewhat inwards on the stationary support arm 4, because the stationary support arm 4 is forming an outer shield that is protecting or surrounding the suspension point 5 of the milking cluster 3, whereby the suspension point 5 is located at said short distance inside the outer end of the stationary support arm 4. Additionally, as can be seen, the projecting length 4_{L} of the stationary support arm 4 is rather short and it does not stick out significantly beyond the edge 12a of the platform 12. In this embodiment the projecting length 4_{L} of the stationary support arm 4 is approximately 20 cm. The projecting length 4_{L} is hereby essentially configured to provide a sufficient width or room for the milking cluster 3 to hang in the upper position U_{P}. The projecting length 4_{L} is preferably in a range of 10 - 30 cm, so that neither the stationary support arm 4 nor its suspension point 5 is extending significantly beyond the edge 12a of the platform 12. As previously mentioned, the suspension point 5 as well as the cord 6 of the milking cluster 3 can in this way be advantageously arranged close to the platform edge 12a, while also providing an ergonomic position close to the animal.

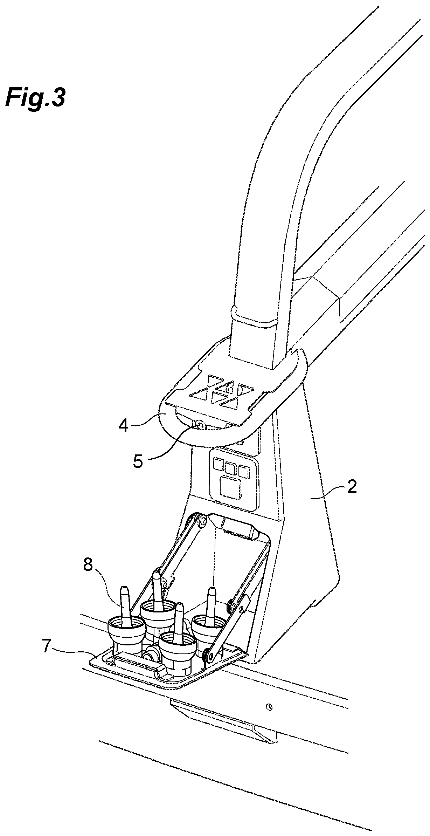

Fig. 2B is showing the inclined cluster slide surface 7 having an upper end 7b, which is located at a vertical distance D below the stationary support arm 4. The support structure 2 is hereby provided with more space below the stationary support arm 4 for the milking cluster 3 to hang in the upper position U_{P}. Furthermore, as can be seen in Figs. 3 and 4, the support structure 2 is arranged with a console (no reference signs) between the stationary support arm 4 and the inclined cluster slide surface 7, whereby an automatic cluster removal device 10 can be operated via the console. The inclined cluster slide surface 7 is provided with a vertical extension 7v, as seen in the vertical direction V, between the lower end 7a and the upper end 7b of the inclined cluster slide surface 7. More precisely, the vertical extension 7_{V} in the embodiment is approximately 45% of a total height (vertical distance D + 7_{V}) of the support structure 2. The inclined cluster slide surface 7 is preferably located along a 30% - 50% lower part of the total height of the support structure to provide a suitable space or distance D below the stationary support arm 4 for the milking cluster to hang in the upper position, while providing a sufficient vertical extension 7v on the inclined cluster slide surface 7 to ensure a correct milking cluster drop.

Fig. 3 is showing the support structure of the embodiment forming a cabinet 2 with a cleaning device 8 for the milking cluster 3 arranged inside the cabinet 2. As can be seen, the inclined cluster slide surface 7 is a cabinet door, which can be turned from a first closed position (as shown in for instance Figs. 1 and 4) to a second open position (as shown in Fig. 3) for gaining access to the cleaning device 8 for the milking cluster 3. The cleaning device 8 has (four) so called jetters onto which the (four) teat cups of the milking cluster 3 are mounted for a spray cleaning operation of the milking cluster 3.

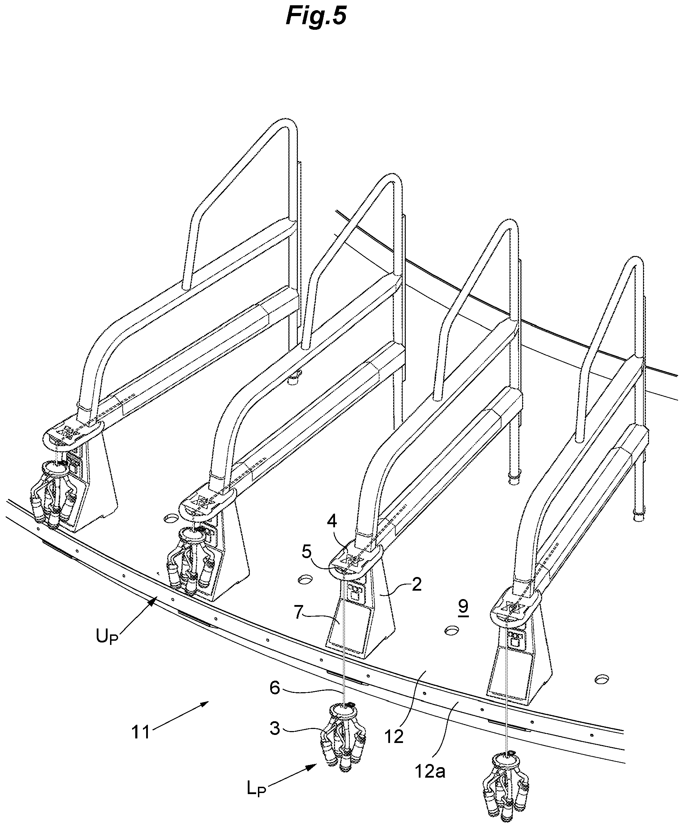

Additionally, the support structure 2 is part of a side wall 9a in a milking stall 9 (see also Figs. 4 and 5). The shown support structure 2 is part of an end post of the side wall 9a in the milking stall 9. Furthermore, as can be seen in Figs 2A - 2B, the support structure 2 and the side wall 9a of the milking stall 9 is housing an automatic cluster removal device 10 for automatically removing the milking cluster 3 from the teats of an animal when the milking session is completed. The automatic cluster removal device 10 is further arranged to move the milking cluster 3 between the upper position U_{P} and the lower position L_{P}. The automatic cluster removal device 10 is hereby integrated and protected inside the side wall 9a and support structure 2. The automatic cluster removal device 10 includes a pneumatic cylinder connected to the cord 6 of the milking cluster 3 and a control unit for automatically actuating the pneumatic cylinder 10 to retract the cord 6 and remove the milking cluster 3 when the milking session is completed. The pneumatic cylinder 10 of the embodiment is arranged inside a side rail of the side wall 9a, wherein the cord 6 is extending horizontally inside the side rail and the support arm 4, which is arranged in level with the side rail. In other words, the cord 6 is extending linearly to the suspension point 5 (without any pulley-arrangement located inside the support structure 2 or the side wall 9a). Additionally, the support structure 2 of the embodiment includes the control unit with an input device (buttons) for the automatic cluster removal device 10.

Fig. 5 is showing a perspective view of a rotary milking parlor 11 including a plurality of milking stalls 9 arranged on a rotating platform 12. Each milking stall 9 includes the milking arrangement 1 according to the embodiment described above. Hence, the support structure 2 is situated on the rotatable platform 12 for suspending the milking cluster 3 in the upper position U_{P} above the rotatable platform 12 and the lower position L_{P} below the rotatable platform 12, wherein the inclined cluster slide surface 7 extends to an outer edge 12a of the rotatable platform 12. The inclined cluster slide surface 7 thereby ensures that the milking cluster 3 slides past the outer edge 12a of the rotatable platform 12, whereby the milking cluster 3 is prevented from getting stuck on the platform 12. As mentioned above, in connection with Figs 2A and 2B, the lower end 7a of the inclined cluster slide surface 7 is vertically aligned with the outer edge 12a of the rotatable platform 12. Moreover, the suspension point 5 on the stationary support arm 4 is also vertically aligned with the outer edge 12a of the rotatable platform 12. Accordingly, the cord 6 of the milking cluster 3 is kept near the outer edge 12a of the rotating platform 12 to maintain the cord 6 of the milking cluster 3 safely away from a stationary bridge (not shown) located ahead of the milking clusters 3 in lower position L_{P}. The cord 6 can thereby safely pass (without being forced or guided) into a gap formed between the stationary bridge and the rotatable platform 12.

The present invention is not restricted to the embodiment of the detailed description as shown above but may be varied and modified within the scope of the following claims.

## Claims

1. A milking arrangement (1) for an animal including a support structure (2) for a milking cluster (3), wherein the milking cluster (3) is moveable between an upper position (U_{P}) and a lower position (L_{P}) in relation to the support structure (2), the support structure (2) including a stationary support arm (4) having a projecting length (4_{L}) as seen in a horizontal direction (H) with a suspension point (5) from which the milking cluster (3) is arranged to be suspended in a cord (6) as it moves between the upper and lower positions (U_{P}, L_{P}),
the support structure (2) includes an inclined cluster slide surface (7), which is situated below the stationary support arm (4), the inclined cluster slide surface (7) having a horizontal extension (7_{H}), as seen in the horizontal direction (H) underneath the stationary support arm (4), towards a position vertically below the suspension point (5), so that the milking cluster (3) will slide along the inclined cluster slide surface (7) as the milking cluster (3) moves between the upper position (U_{P}) and the lower position (L_{P}), wherein the support structure is forming a cabinet (2) with a cleaning device (8) for the milking cluster (3) arranged inside the cabinet (2), wherein the inclined cluster slide surface (7) is forming a cabinet door, which is turnable between a first position in which the cabinet (2) is closed and a second position in which the cabinet (2) is open for accessing the cleaning device (8) for the milking cluster.

2. The milking arrangement of claim 1, wherein the inclined cluster slide surface (7) is extending at an inclination angle (α) in a range of 30° - 70°, or preferably in a range of 45° - 65°, in relation to the horizontal direction (H).

3. The milking arrangement of claim 1 or 2, wherein the horizontal extension (7_{H}) on the inclined cluster slide surface (7) is at least 60% of the projecting length (4_{L}) on the stationary support arm (4).

4. The milking arrangement according to any one of claims 1 - 3, wherein the horizontal extension (7_{H}) on the inclined cluster slide surface (7) is at most 100% of the projecting length (4_{L}) on the stationary support arm (4).

5. The milking arrangement according to any one of claims 1 - 4, wherein the projecting length (4_{L}) on the stationary support arm (4) is in a range of 10 - 30 cm.

6. The milking arrangement according to any one of claims 1 - 5, wherein the inclined cluster slide surface (7) has a lower end (7a), which is situated vertically below the suspension point (5) on the stationary support arm (4).

7. The milking arrangement according to any one of claims 1 - 6, wherein the inclined cluster slide surface (7) has an upper end (7b), which is located at a vertical distance (D) below the stationary support arm (4).

8. The milking arrangement of claim 7, wherein the inclined cluster slide surface (7) has a vertical extension (7v), as seen in the vertical direction (V), between a lower end (7a) and an upper end (7b) of the inclined cluster slide surface (7), wherein the vertical extension (7v) is 30% - 50% of a total height of the support structure (2), as seen in the vertical direction (V), between the lower end (7a) of the inclined cluster slide surface (7) and the stationary support arm (4).

9. The milking arrangement according to any one of claims 1 - 8, wherein the support structure (2) is part of a side wall (9a) in a milking stall (9).

10. The milking arrangement according to claim 9, wherein the support structure (2) and the side wall (9a) of the milking stall (9) is housing an automatic cluster removal device (10) for automatically removing the milking cluster (3) from the teats of an animal when milking is completed, wherein the automatic cluster removal device (10) is arranged to move the milking cluster (3) between the upper position (U_{P}) and the lower position (L_{P}).

11. A milking parlor (11) including a plurality of milking stalls (9) arranged on a platform (12), **characterized in that** each milking stall (9) includes the milking arrangement (1) according to any one of claims 1 - 10, wherein the support structure (2) is situated on the platform (12) for suspending the milking cluster (3) in the upper position (U_{P}) above the platform (12) and the lower position (L_{P}) below the platform (12), wherein the inclined cluster slide surface (7) extends to an edge (12a) of the platform (12).

12. The milking parlor of claim 11, wherein the platform (12) is a rotatable platform forming a rotary milking parlor (11) and the inclined cluster slide surface (7) extends to an outer edge (12a) of the rotatable platform (12).

13. The milking parlor of claim 11 or 12, wherein the inclined cluster slide surface (7) has a lower end (7a), which is vertically aligned with the edge (12a) of the platform (12).

14. The milking parlor according to any one of claims 11 - 13, wherein the suspension point (5) on the stationary support arm (4) is vertically aligned with the edge (12a) of the platform (12).

## Patentansprüche

1. Melkanordnung (1) für ein Lebewesen, einschließlich einer Tragstruktur (2) für ein Melkzeug (3), wobei das Melkzeug (3) zwischen einer oberen Position (U_{P}) und einer unteren Position (L_{P}) in Bezug auf die Tragstruktur (2) bewegbar ist, die Tragstruktur (2) einschließlich eines stationären Tragarms (4), der eine vorstehende Länge (4_{L}), in einer horizontalen Richtung (H) gesehen, aufweist, mit einem Aufhängepunkt (5), von dem das Melkzeug (3) angeordnet ist, an einem Seil (6) aufgehängt zu sein, während es sich zwischen der oberen und unteren Position (U_{P}, L_{P}) bewegt,
die Tragstruktur (2) eine geneigte Zeug-Gleitoberfläche (7), die unterhalb des stationären Tragarms (4) liegt, einschließt, wobei die geneigte Zeug-Gleitoberfläche (7) eine horizontale Verlängerung (7_{H}), in einer horizontalen Richtung (H) unter dem stationären Tragarm (4) gesehen, zu einer Position vertikal unterhalb des Aufhängepunkts (5), aufweist, sodass das Melkzeug (3) die geneigte Zeug-Gleitoberfläche (7) entlanggleitet, während sich das Melkzeug (3) zwischen der oberen Position (U_{P}) und der unteren Position (L_{P}) bewegt, wobei die Tragstruktur einen Schrank (2) mit einer Reinigungsvorrichtung (8) für das Melkzeug (3), die in dem Schrank (2) angeordnet ist, ausbildet, wobei die geneigte Zeug-Gleitoberfläche (7) eine Schranktür ausbildet, die zwischen einer ersten Position, in der der Schrank (2) geschlossen ist, und einer zweiten Position, in der der Schrank (2) zum Zugang zu der Reinigungsvorrichtung (8) für das Melkzeug geöffnet ist, drehbar ist.

2. Melkanordnung nach Anspruch 1, wobei die geneigte Zeug-Gleitoberfläche (7) sich in einem Neigungswinkel (a) in einem Bereich von 30° - 70°, oder vorzugsweise in einem Bereich von 45° - 65°, in Bezug auf die horizontale Richtung (H) erstreckt.

3. Melkanordnung nach Anspruch 1 oder 2, wobei die horizontale Verlängerung (7_{H}) auf der geneigten Zeug-Gleitoberfläche (7) mindestens 60 % der vorstehenden Länge (4_{L}) an dem stationären Tragarm (4) beträgt.

4. Melkanordnung nach einem der Ansprüche 1 bis 3, wobei die horizontale Verlängerung (7_{H}) auf der geneigten Zeug-Gleitoberfläche (7) höchstens 100 % der vorstehenden Länge (4_{L}) an dem stationären Tragarm (4) beträgt.

5. Melkanordnung nach einem der Ansprüche 1 bis 4, wobei die vorstehende Länge (4_{L}) an dem stationären Tragarm (4) in einem Bereich von 10 - 30 cm liegt.

6. Melkanordnung nach einem der Ansprüche 1 bis 5, wobei die geneigte Zeug-Gleitoberfläche (7) ein unteres Ende (7a), das vertikal unterhalb des Aufhängepunkts (5) an dem stationären Tragarm (4) liegt, aufweist.

7. Melkanordnung nach einem der Ansprüche 1 bis 6, wobei die geneigte Zeug-Gleitoberfläche (7) ein oberes Ende (7b), das sich in einem vertikalen Abstand (D) unterhalb des stationären Tragarms (4) befindet, aufweist.

8. Melkanordnung nach Anspruch 7, wobei die geneigte Zeug-Gleitoberfläche (7) eine vertikale Verlängerung (7v), in der vertikalen Richtung (V) gesehen, zwischen einem unteren Ende (7a) und einem oberen Ende (7b) der geneigten Zeug-Gleitoberfläche (7) aufweist, wobei die vertikale Verlängerung (7v) 30 % - 50 % einer Gesamthöhe der Tragstruktur (2), in der vertikalen Richtung (V) gesehen, zwischen dem unteren Ende (7a) der geneigten Zeug-Gleitoberfläche (7) und dem stationären Trägerarm (4) beträgt.

9. Melkanordnung nach einem der Ansprüche 1 bis 8, wobei die Tragstruktur (2) Teil einer Seitenwand (9a) in einem Melkstall (9) ist.

10. Melkanordnung nach Anspruch 9, wobei die Tragstruktur (2) und die Seitenwand (9a) des Melkstalls (9) eine automatische Melkzeugabnahmevorrichtung (10) zum automatischen Abnehmen des Melkzeugs (3) von den Zitzen eines Lebewesens, nachdem das Melken abgeschlossen ist, aufnimmt, wobei die automatische Melkzeugabnahmevorrichtung (10) angeordnet ist, um das Melkzeug (3) zwischen der oberen Position (U_{P}) und die unteren Position (L_{P}) zu bewegen.

11. Melkstand (11), einschließlich einer Vielzahl von Melkständen (9), die auf einer Plattform (12) angeordnet sind, **dadurch gekennzeichnet, dass** jeder Melkstall (9) die Melkanordnung (1) nach einem der Ansprüche 1 bis 10 einschließt, wobei die Tragstruktur (2) auf der Plattform (12) zum Aufhängen des Melkzeugs (3) in der oberen Position (U_{P}) über der Plattform (12) und der unteren Position (L_{P}) unterhalb der Plattform (12) liegt, wobei sich die geneigte Zeug-Gleitoberfläche (7) bis zu einer Kante (12a) der Plattform (12) erstreckt.

12. Melkstand nach Anspruch 11, wobei die Plattform (12) eine rotierbare Plattform ist, die einen rotierenden Melkstand (11) ausbildet, und sich die geneigte Zeug-Gleitoberfläche (7) bis zu einer Außenkante (12a) der rotierbaren Plattform (12) erstreckt.

13. Melkstand nach Anspruch 11 oder 12, wobei die geneigte Zeug-Gleitoberfläche (7) ein unteres Ende (7a), das an der Kante (12a) der Plattform (12) vertikal ausgerichtet ist, aufweist.

14. Melkstand nach einem der Ansprüche 11 bis 13, wobei der Aufhängepunkt (5) an dem stationären Tragarm (4) an der Kante (12a) der Plattform (12) vertikal ausgerichtet ist.

## Revendications

1. Dispositif de traite (1) pour un animal comprenant une structure de support (2) pour un faisceau trayeur (3), dans lequel le faisceau trayeur (3) est mobile entre une position supérieure (U_{P}) et une position inférieure (L_{P}) par rapport à la structure de support (2), la structure de support (2) comportant un bras de support stationnaire (4) ayant une longueur saillante (4_{L}) vue dans une direction horizontale (H) avec un point de suspension (5) auquel le faisceau trayeur (3) est arrangé pour être suspendu dans un cordon (6) lorsqu'il se déplace entre les positions supérieure et inférieure (U_{P}, L_{P}),
la structure de support (2) comporte une surface de glissement de faisceau inclinée (7), qui est située sous le bras de support stationnaire (4), la surface de glissement de faisceau inclinée (7) ayant une extension horizontale (7_{H}), vue dans la direction horizontale (H) sous le bras de support stationnaire (4), vers une position verticalement inférieure au point de suspension (5), de sorte que le faisceau trayeur (3) glissera le long de la surface de glissement de faisceau inclinée (7) lorsque le faisceau trayeur (3) se déplace entre la position supérieure (U_{P}) et la position inférieure (L_{P}), dans lequel la structure de support forme une armoire (2) avec un dispositif de nettoyage (8) pour le faisceau trayeur (3) disposé à l'intérieur de l'armoire (2), dans lequel la surface de glissement inclinée du faisceau trayeur (7) formant une porte d'armoire qui peut être tournée entre une première position dans laquelle l'armoire (2) est fermée et une seconde position dans laquelle l'armoire (2) est ouverte pour accéder au dispositif de nettoyage (8) pour le faisceau trayeur.

2. Dispositif de traite selon la revendication 1, dans lequel la surface de glissement inclinée du faisceau (7) s'étend à un angle d'inclinaison (a) compris entre 30° et 70°, ou de préférence entre 45° et 65°, par rapport à la direction horizontale (H).

3. Dispositif de traite selon la revendication 1 ou 2, dans lequel l'extension horizontale (7_{H}) sur la surface de glissement inclinée du faisceau (7) représente au moins 60 % de la longueur en saillie (4_{L}) sur le bras de support stationnaire (4).

4. Dispositif de traite selon l'une quelconque des revendications 1 à 3, dans lequel l'extension horizontale (7_{H}) sur la surface de glissement inclinée du faisceau (7) est au maximum de 100 % de la longueur en saillie (4_{L}) sur le bras de support stationnaire (4).

5. Dispositif de traite selon l'une quelconque des revendications 1 à 4, dans lequel la longueur en saillie (4_{L}) du bras de support stationnaire (4) est comprise entre 10 et 30 cm.

6. Dispositif de traite selon l'une quelconque des revendications 1 à 5, dans lequel la surface de glissement inclinée du faisceau (7) présente une extrémité inférieure (7a) située verticalement au-dessous du point de suspension (5) sur le bras de support stationnaire (4).

7. Dispositif de traite selon l'une quelconque des revendications 1 à 6, dans lequel la surface de glissement inclinée du faisceau (7) présente une extrémité supérieure (7b) située à une distance verticale (D) au-dessous du bras de support stationnaire (4).

8. Dispositif de traite selon la revendication 7, dans lequel la surface de glissement inclinée du faisceau (7) a une extension verticale (7v), vue dans la direction verticale (V), entre une extrémité inférieure (7a) et une extrémité supérieure (7b) de la surface de glissement inclinée du faisceau (7), dans lequel l'extension verticale (7v) est de 30 % à 50 % de la hauteur totale de la structure de support (2), vue dans la direction verticale (V), entre l'extrémité inférieure (7a) de la surface de glissement inclinée du faisceau (7) et le bras de support stationnaire (4).

9. Dispositif de traite selon l'une quelconque des revendications 1 à 8, dans lequel la structure de support (2) fait partie d'une paroi latérale (9a) d'une stalle de traite (9).

10. Dispositif de traite selon la revendication 9, dans lequel la structure de support (2) et la paroi latérale (9a) de la stalle de traite (9) abritent un dispositif de retrait automatique du faisceau trayeur (10) pour retirer automatiquement le faisceau trayeur (3) des trayons d'un animal lorsque la traite est terminée, dans lequel le dispositif de retrait automatique du faisceau trayeur (10) est conçu pour déplacer le faisceau trayeur (3) entre la position supérieure (U_{P}) et la position inférieure (L_{P}).

11. Salle de traite (11) comportant plusieurs stalles de traite (9) disposées sur une plate-forme (12), **caractérisée en ce que** chaque stalle de traite (9) comporte le dispositif de traite (1) selon l'une des revendications 1 à 10, dans laquelle la structure de support (2) est située sur la plate-forme (12) pour suspendre le faisceau trayeur (3) dans la position supérieure (U_{P}) au-dessus de la plate-forme (12) et dans la position inférieure (L_{P}) au-dessous de la plate-forme (12), dans laquelle la surface de glissement inclinée du faisceau trayeur (7) s'étend jusqu'à un bord (12a) de la plate-forme (12).

12. Salle de traite selon la revendication 11, dans laquelle la plate-forme (12) est une plate-forme rotative formant une salle de traite rotative (11) et la surface de glissement inclinée du faisceau (7) s'étend jusqu'à un bord extérieur (12a) de la plate-forme rotative (12).

13. Salle de traite selon la revendication 11 ou 12, dans laquelle la surface de glissement inclinée du faisceau (7) a une extrémité inférieure (7a), qui est alignée verticalement avec le bord (12a) de la plate-forme (12).

14. Salle de traite selon l'une quelconque des revendications 11 à 13, dans laquelle le point de suspension (5) du bras de support stationnaire (4) est aligné verticalement avec le bord (12a) de la plate-forme (12).
